# EUROPÄISCHE PATENTSCHRIFT

(11) **EP 3 536 456 B1**
(45) Veröffentlichungstag und Bekanntmachung des Hinweises auf die Patenterteilung: **05.05.2021**
(21) Anmeldenummer: 18159848.3
(22) Anmeldetag: 05.03.2018
(51) Int. Cl.: B25B 5/00, B25B 5/14, B25B 5/16, B25B 11/00

(54) **SPANNSYSTEM**
TENSIONING SYSTEM
SYSTÈME DE SERRAGE

(43) Veröffentlichungstag der Anmeldung: 11.09.2019
(73) Patentinhaber: Nickl, Frank, 73079 Süssen (DE)
(72) Erfinder: Nickl, Frank, 73079 Süßen (DE); Woryna, Jacek, 73079 Süßen (DE)
(74) Vertreter: Ruckh, Rainer Gerhard

(56) Entgegenhaltungen:
- DE-A1-102014 001 963
- DE-A1-102016 122 090

## Beschreibung

Die Erfindung betrifft ein Spannsystem zum Spannen von Werkstücken.

Derartige Spannsysteme sind als Nullpunkt-Spannsysteme ausgebildet, bei welchen wenigstens eine Nullpunktplatte vorgesehen ist, die auf einem Maschinentisch in einer vorgegebenen Sollposition befestigt wird. Die Nullpunktplatte selbst weist an ihrer Oberseite in vorgegebenen Sollpositionen standardisierte Nullpunktaufnahmen auf, die als an der Oberseite der Nullpunktplatte ausmündende Ausnehmungen ausgebildet sind. In diese Nullpunktaufhahmen können ebenfalls standardisierte Nullpunktbolzen eingesetzt werden. Diese dienen als Befestigungsmittel, um an der Nullpunktplatte Spanneinheiten positionieren zu können, mit denen dann ein zu bearbeitendes Werkstück in einer Sollposition an der Nullpunktplatte zu befestigen ist. Derartige Spanneinheiten können von Schraubstöcken oder auch von Spannpratzen gebildet sein.

Ein Problem hierbei besteht darin, dass die zu bearbeitenden Werkstücke oft eine komplexe Geometrie mit unregelmäßigen, teilweise gekrümmten Oberflächen aufweisen. Beispiele hierfür sind Gussteile, die insbesondere im Kraftfahrzeugbereich verwendet werden können. Aufgrund der komplexen Geometrie derartiger Werkstücke sind aufwändige Spanneinheiten, beispielsweise eine Vielzahl von Spannpratzen erforderlich, um das jeweilige Werkstück an der Nullpunktplatte zu befestigen. Abgesehen von dem dadurch bedingten hohen Aufwand zur Befestigung des Werkstücks an der Nullpunktplatte besteht weiterhin ein wesentliches Problem darin, das Werkstück positionsgenau an der Nullpunktplatte zu befestigen. Zwar können die Spanneinheiten mit Nullpunktbolzen in exakten Positionen an der Nullpunktplatte befestigt werden. Jedoch kann das Werkstück noch in unterschiedlichen, nicht definierten Positionen mit diesen Spanneinheiten fixiert werden, wodurch eine exakte Positionierung des Werkstücks relativ zur Nullpunktplatte erheblich erschwert ist.

Aus der DE 10 2014 001963 A1 ist ein Spannsystem bekannt, welches keine Ausgleichsverbindungseinheit aufweist.

Der Erfindung liegt die Aufgabe zugrunde, ein Spannsystem bereitzustellen, mittels dessen schnell, präzise und mit geringem konstruktiven Aufwand eine Fixierung eines Werkstücks auf einer Nullpunktplatte ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein Spannsystem zum Spannen eines Werkstücks auf wenigstens einer Nullpunktplatte. Eine Ausgleichsverbindungseinheit ist vorgesehen, welche einen Grundkörper aufweist, von dessen Oberseite ein Verbindungselement hervorsteht, welches in eine Aufnahme an der Unterseite des Werkstücks einführbar und dort fixierbar ist, und von dessen Unterseite ein Nullpunktbolzen hervorsteht, welcher in eine Nullpunktaufnahme der Nullpunktplatte einführbar ist. der Grundkörper der Ausgleichsverbindungseinheit bildet Verstellmittel aus. In einer Lösestellung der Verstellmittel ist mit diesen die Relativposition des Verbindungselements zum Nullpunktbolzen einstellbar. Diese Einstellung ist mit Fixiermitteln fixierbar.

Der Grundgedanke der Erfindung besteht darin, ein Werkstück mittels einer Anzahl von Ausgleichsverbindungseinheiten an der Nullpunktplatte eines Nullpunkt-Spannsystems zu befestigen. Ein wesentlicher Aspekt hierbei besteht darin, dass die oder jede Ausgleichsverbindungseinheit mit dem Nullpunktbolzen eine erste Schnittstelle zur Herstellung einer Verbindung zur Nullpunktplatte aufweist, wobei diese durch standardisierte Schnittstellenelemente, nämlich dem Nullpunktbolzen und einer hierzu korrespondierenden Nullpunktaufnahme gebildet ist, und dass jede Ausgleichsverbindungseinheit mit dem Verbindungselement eine Schnittstelle zur direkten Verbindung mit dem Werkstück bildet. Hierbei ist wesentlich, dass im Werkstück eine Aufnahme für das Verbindungselement vorgesehen ist. Damit kann mit den Ausgleichsverbindungseinheiten eine direkte Verbindung zwischen dem Werkstück und der Nullpunktplatte hergestellt werden, ohne dass hierfür separate, aufwändige Spanneinheiten vorgesehen sind.

Ein weiterer wesentlicher Aspekt der Erfindung besteht darin, dass das Verbindungselement und der Nullpunktbolzen in der Ausgleichsverbindungseinheit integriert sind und eine definierte Relativposition zueinander aufweisen. Durch die Verbindung des Werkstücks mit den Nullpunktbolzen wird somit ohne weitere Hilfsmittel eine exakte Positionierung und Fixierung des Werkstücks auf der Nullpunktplatte erzielt, wodurch ein erheblicher Rationalisierungseffekt erzielt wird. Ein wesentlicher Vorteil hierbei besteht darin, dass die oder jede Ausgleichsverbindungseinheit Verstellmittel aufweist, mit denen die Relativposition des Verbindungselements und des Nullpunktbolzens eingestellt werden kann.

Mit diesen Verstellmitteln können toleranzbedingte Abweichungen der Positionen der Aufnahmen im Werkstück von Sollpositionen auf sehr einfache Weise ausgeglichen werden, so dass bei einem Raster mit mehreren Aufnahmen die dort eingesetzten Ausgleichsverbindungseinheiten auch exakt in die zugeordneten Nullpunktaufnahmen der Nullpunktplatte passen.

Prinzipiell kann das Werkstück ein Massivteil sein. Die wenigstens eine Aufnahme ist von einer Bohrung in dem Massivteil gebildet.

Unter Massivteil sind allgemein plattenförmige Stahlkörper, Sägezuschnitte und ähnliche Teile aus Stahl und ähnlichen Werkstoffen zu verstehen. Die Aufnahmen in Form von Bohrungen, die in derartige Werkstücke eingebracht werden, können prinzipiell hinsichtlich ihrer Positionen geringe Abweichungen von Sollpositionen aufweisen, welche an das Raster der Nullpunktaufnahme angepasst sind.

Insbesondere können die Werkstücke auch von Gussteilen gebildet sein, insbesondere Druckguss-, Stahlguss und Graugussteilen. Prinzipiell sind sogar Werkstücke bestehend aus Kunststoff-Spritzgussteilen möglich.

Erfindungsgemäß sind als Aufnahme für die Verbindungselemente der Ausgleichsverbindungseinheit in dem Gussteil Einlegeteile vorgesehen. Die Einlegeteile werden im Herstellungsprozess in das Gussteil derart eingearbeitet, dass sie in eine Gussform eingelegt und dann mit dem Gussmaterial zur Bildung des Gussteils umgossen werden.

Dabei werden die Einlegeteile so in die Gussform eingelegt, dass diese in Sollpositionen liegen, die dem Raster der Nullpunktaufnahme in der Nullpunktplatte entsprechen. Bei dem Herstellungsprozess des Gussteils, insbesondere beim Aushärten des Gussteils, können bedingt durch Verzüge im Gussteil die Positionen der Einlegeteile von den Sollpositionen abweichen.

Derartige toleranzbedingte Positionsschwankungen können mit den in den Ausgleichsverbindungseinheiten vorgesehenen Verstellmitteln auf sehr einfache Weise ausgeglichen werden, so dass die mit den Verbindungselementen in die Einlegeteile des Gussteils eingeführten Ausgleichsverbindungseinheiten auch mit ihren Nullpunktbolzen in die Nullpunktaufnahmen passen.

Ein wesentlicher Vorteil der Erfindung besteht darin, dass dieser Toleranzausgleich selbsttätig und ohne Hilfsmittel funktioniert. Dies wird dadurch erreicht, dass die Verstellmittel einer Ausgleichsverbindungseinheit in ihrer Lösestellung eine in durch die Geometrie der Ausgleichsverbindungseinheit vorgegebenen Grenzen freie Einstellbarkeit des Verbindungselements relativ zum Nullpunktbolzen gestatten. Damit können die Verbindungselemente der Ausgleichsverbindungseinheit zunächst in den Aufnahmen des Werkstücks befestigt werden. Die Verbindungselemente sind dabei vorteilhaft von Gewindestiften gebildet, die in die Aufnahmen des Werkstücks eingeschraubt werden. Danach können, bedingt durch die Beweglichkeit zwischen Verbindungselementen und Nullpunktbolzen über die Verstellmittel, die Nullpunktbolzen relativ zu den Verstellmitteln verstellt werden, so dass auch die Nullpunktbolzen der Ausgleichsverbindungseinheit in die Nullpunktaufnahmen der Nullpunktplatte eingeführt werden können.

Dann können die Nullpunktbolzen in den Nullpunktaufnahmen mittels Spannmitteln fixiert werden. Dabei können mechanische oder vorzugsweise automatisiert arbeitende hydraulische oder pneumatische Spannmittel vorgesehen sein, mittels derer in bekannter Weise die Nullpunktbolzen in den Nullpunktaufnahmen angezogen und dadurch fixiert werden.

Das erfindungsgemäße Spannsystem kann mit einem geringen konstruktiven Aufwand realisiert werden. Die Ausgleichsverbindungseinheiten bilden kompakte, einfache Einheiten, die alleine und ohne weitere Hilfsmittel eine positionsgenaue Positionierung und Fixierung des Werkstücks auf der Nullpunktplatte des Nullpunkt-Spannsystems ermöglichen. Werkstückseitig brauchen lediglich die Aufnahmen in die Werkstücke eingebracht werden, was ohne großen konstruktiven Mehraufwand realisiert werden kann. Dies gilt insbesondere für Aufnahmen in Form von Einlegeteilen in Gussteilen. Dort können durch Einführen der Verbindungselemente der Ausgleichsverbindungseinheiten oder weiterer Verbindungsteile Halterungen geschaffen werden, an welchen eine Bedienperson das Gussteil halten kann, um es beispielsweise nach dem Gussvorgang an seiner Oberfläche nachzubearbeiten.

Ein wesentlicher Vorteil des erfindungsgemäßen Spannsystems besteht darin, dass eine vollautomatisierte Bearbeitung des Gussteils, insbesondere durch den Einsatz von Robotern ermöglicht wird. So kann mit einem Roboter das Werkstück mit den in den Aufnahmen befestigten Verbindungselementen der Ausgleichsverbindungseinheit automatisch an der Nullpunktplatte positioniert werden, wobei dann die Nullpunktbolzen der Ausgleichsverbindungseinheiten in die Nullpunktaufnahmen eingeführt werden. Auch die Fixierung des Werkstücks an der Nullpunktplatte durch Betätigung der Spannmittel kann automatisiert erfolgen, ebenso wie die Entnahme des Werkstücks nach erfolgter Bearbeitung. Gemäß einer vorteilhaften Ausgestaltung der Erfindung weist der Grundkörper ein mit dem Nullpunktbolzen verbundenes Innensegment, ein mit dem Verbindungselement verbundenes Außensegment sowie ein das Innensegment und das Außensegment koppelndes Zwischensegment auf. Durch eine Relativbewegung zwischen dem Außensegment und dem Innensegment ist eine Höhenverstellung des Verbindungselements relativ zum Nullpunktbolzen in Richtung der Längsachse des Nullpunktbolzens bewirkt. Durch eine Relativbewegung des Innensegments relativ zum Zwischensegment ist eine laterale Einstellung des Verbindungselements relativ zum Nullpunktbolzen in einer Ebene senkrecht zur Längsachse des Nullpunktbolzens bewirkt.

Damit sind in einer kompakten Bauform sowohl die Mittel zur Höhenverstellung als auch zur lateralen Verstellung der Relativposition von Verbindungselement und Nullpunktbolzen im Grundkörper der Ausgleichsverbindungseinheit selbst integriert, wobei hierzu die Ausgleichsverbindungseinheit relativ wenig Einzelteile aufweist und einfach herstellbar ist.

Besonders vorteilhaft werden die Spannmittel, mittels derer der Nullpunktbolzen in der Nullpunktaufnahme fixiert wird, auch als Fixiermittel zur Fixierung von Einstellungen der Ausgleichsverbindungseinheit genutzt. Durch die Doppelnutzung der Spannmittel ergibt sich erheblicher Rationalisierungseffekt.

In jedem Fall ist mit den Spannmitteln die laterale Einstellung des Verbindungselements relativ zum Nullpunktbolzen fixierbar.

Gemäß einer vorteilhaften ersten Variante der Erfindung ist zusätzlich mit den Spannmitteln als Fixiermittel die Höheneinstellung des Verbindungselements relativ zum Nullpunktbolzen fixierbar.

Damit kann allein mit den Spannmitteln die Relativposition des Verbindungselements zum Nullpunktbolzen fixiert werden. Da in diesem Fall keine weiteren Fixiermittel benötigt werden, die separat betätigt werden müssen, wird bei dieser Variante eine hohe Bedienerfreundlichkeit erzielt.

Bei dieser Variante ist für einen Höhenausgleich zwischen Verbindungselement und Nullpunktbolzen zwischen dem Außensegment und dem Zwischensegment eine Hülse vorgesehen, wobei bei nicht betätigtem Fixiermittel die Hülse in axialer Richtung gegenüber dem Zwischensegment verschiebbar ist, und wobei bei betätigtem Fixiermittel die Hülse durch Festklemmen am Zwischensegment lagefixiert ist.

Dabei ist die Hülse an einer inneren Mantelfläche des Außensegments gelagert.

Mit der Hülse als zusätzlichem Element kann somit bei Betätigen der die Fixiermittel bildenden Spannmittel ein Höhenausgleich derart erfolgen, dass sich die Hülse und das Zwischensegment gegenläufig in Längsrichtung des Nullpunktbolzens bewegen und schließlich eine Klemmverbindung bilden, mit der die Höheneinstellung fixiert ist.

Zweckmäßig weist die Hülse einen Ring und daran anschließend Flächensegmente auf, die durch in axialer Richtung der Hülse verlaufende Spalte getrennt sind.

Die Innenseiten der Flächensegmente bilden Schrägflächen aus, die korrespondierenden Schrägflächen an der äußeren Mantelfläche des Zwischensegments zugeordnet sind.

Durch die Betätigung der Spannmittel werden die Hülse und das Zwischensegment gegenläufig in Längsrichtung gegeneinander bewegt, bis die Schrägflächen der Hülse an den Schrägflächen des Zwischensegments anliegen und so eine Klemmverbindung ausbilden.

Gemäß einer vorteilhaften zweiten Variante der Erfindung sind als Fixiermittel zur Fixierung der Höheneinstellung des Verbindungselements relativ zum Nullpunktbolzen Gewindestifte vorgesehen, die an der Außenseite des Außensegments betätigbar sind.

Dabei durchsetzt jeder Gewindestift das Außensegment in radialer Richtung. Zur Fixierung der Höheneinstellung des Verbindungselements relativ zum Nullpunktbolzen ist der Kopf des Gewindestifts gegen eine äußere Mantelfläche des Zwischensegments gepresst.

Ein Vorteil dieser Ausführungsform besteht darin, dass mit den Gewindestiften eine Höheneinstellung des Verbindungselements relativ zum Nullpunktbolzen unabhängig von der Lateraleinstellung dieser Einheiten vorgenommen werden kann. So kann beim Zusammensetzen der Ausgleichsverbindungseinheit mit den Gewindestiften eine vorläufige Höheneinstellung vorgenommen werden, die nach dem Einsetzen der Verbindungselemente in die Aufnahme des Werkstücks und nach dem Einführen des Nullpunktbolzens in die Nullpunktplatte noch für eine Feinjustage geändert werden kann.

Gemäß einer vorteilhaften Ausgestaltung ist das Verbindungselement pendelnd gelagert.

Die Pendellagerung ist derart, dass das Verbindungselement mit seinem unteren Ende beweglich im Außensegment der Ausgleichsverbindungseinheit gelagert ist, so dass das freie obere Ende des Verbindungselements Pendelbewegungen bezüglich der Längsachse der Ausgleichsverbindungseinheit durchführen kann. Mit diesen Pendelbewegungen können Toleranzen in der Anbringung der Aufnahme innerhalb des Werkstücks ausgeglichen werden.

Gemäß einer vorteilhaften Ausgestaltung der Erfindung weist das Spannsystem eine Referenzverbindungseinheit auf, welche einen Grundkörper aufweist, von dessen Oberseite ein Verbindungselement hervorsteht und von dessen Unterseite ein Nullpunktbolzen hervorsteht. Die Längsachsen des Verbindungselements und des Nullpunktbolzens liegen in einer festen, unveränderlichen Relativposition.

Generell wird bei dem erfindungsgemäßen Spannsystem immer nur eine Referenzverbindungseinheit eingesetzt, und zwar in Verbindung mit einer oder mehreren Ausgleichsvebindungseinheiten. Da die Relativposition zwischen Verbindungselement und Nullpunktbolzen in der Referenzverbindungseinheit fest vorgegeben und nicht einstellbar ist, wird diese Referenzverbindungseinheit als Mastereinheit genutzt, die eine feste Referenzposition zwischen Werkstück und Nullpunktplatte vorgibt. Davon ausgehend werden bei den weiterhin eingesetzten Ausgleichsverbindungseinheiten die Relativpositionen zwischen dem Verbindungselement und Nullpunktbolzen in jeder Ausgleichsverbindungseinheit entsprechend eingestellt.

Damit kann auf einfache Weise eine exakte Absolutpositionierung des Werkstücks auf der Nullpunktplatte realisiert werden.

Gemäß einer vorteilhaften Weiterbildung der Erfindung weist das Spannsystem wenigstens eine Unterstützungsverbindungseinheit auf, welche einen Grundkörper aufweist, von dessen Oberseite ein Verbindungselement hervorsteht. Die Unterseite des Grundkörpers weist eine ebene Unterseite als Auflagefläche auf der Nullpunktplatte auf.

Diese Unterstützungsverbindungseinheit weist den Vorteil auf, dass diese an beliebigen Positionen auf der Nullpunktplatte platziert werden kann. Mit dieser Unterstützungsverbindungseinheit erfolgt eine Abstützung des Werkstücks auf der Nullpunktplatte, um unerwünschte Vibrationen des Werkstücks bei der Bearbeitung zu vermeiden.

Mit derartigen Unterstützungsverbindungseinheiten kann die Anzahl der Ausgleichsverbindungseinheiten zur Fixierung des Werkstücks auf der Nullpunktplatte reduziert werden. Dies ist deshalb vorteilhaft, da es bei Verwendung einer großen Anzahl von Ausgleichsverbindungseinheiten trotz der Verstellmöglichkeiten mit den Verstellmitteln schwierig sein kann, die Nullpunktbolzen aller Ausgleichsverbindungseinheiten exakt auf die Nullpunktaufnahmen auszurichten.

Die Erfindung wird im Folgenden anhand der Zeichnungen erläutert. Es zeigen:
- Figur 1:: Gesamtdarstellung der Komponenten des erfindungsgemäßen Spannsystems.
- Figur 2:: Darstellung eines mit dem erfindungsgemäßen Spannsystem auf einer Nullpunktplatte gespannten Werkstücks.
- Figur 3:: Darstellung der Komponenten einer ersten Ausführungsform einer Ausgleichsverbindungseinheit als Bestandteil des erfindungsgemäßen Spannsystems.
- Figur 4:: Ausgleichsverbindungseinheit gemäß Figur 3 im zusammengebauten Zustand.
- Figur 5:: Darstellung der Komponenten einer zweiten Ausführungsform des erfindungsgemäßen Spannsystems.
- Figur 6:: Ausgleichsverbindungseinheit gemäß Figur 5 im zusammengebauten Zustand.

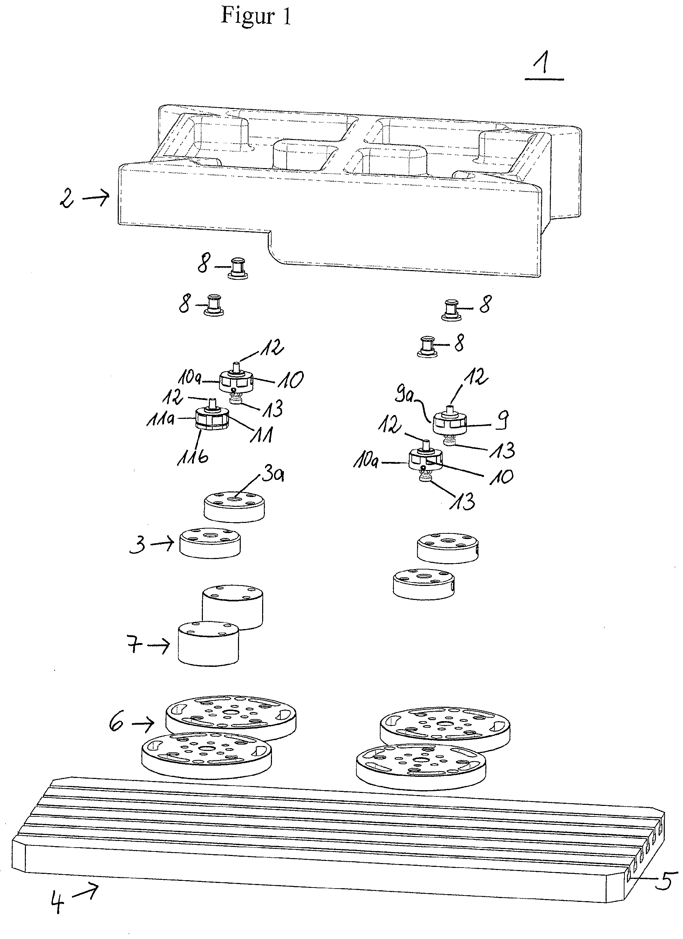

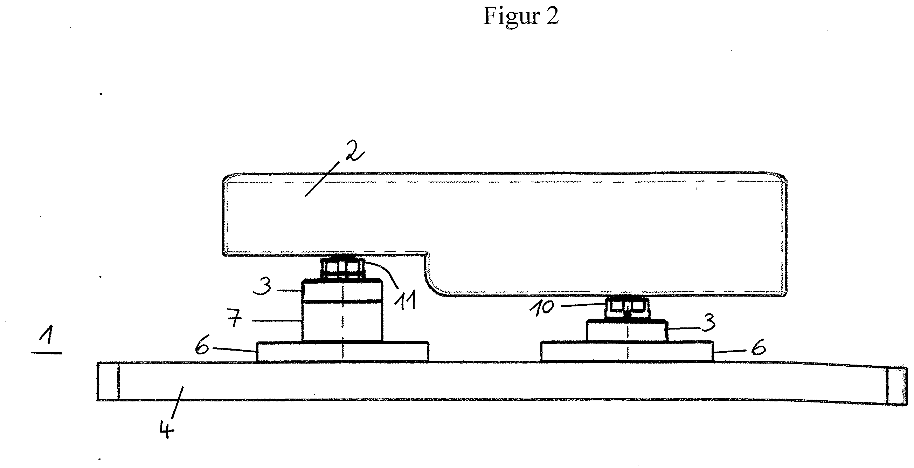

Figur 1 zeigt die Komponenten des erfindungsgemäßen Spannsystems 1. Bei dem Spannsystem 1 handelt es sich um ein Nullpunkt-Spannsystem, bei welchem ein Werkstück 2 in einer vorgegebenen Solllage auf einer Anzahl von Nullpunktplatten 3 befestigt wird, damit das Werkstück 2 nachfolgend in geeigneter Weise bearbeitet werden kann. Während bei dem in den Figuren 1 und 2 dargestellten Ausführungsbeispiel das Werkstück 2 auf mehreren Nullplatten 3 befestigt wird, kann prinzipiell auch nur eine Nullpunktplatte 3 zur Lagerung des Werkstücks 2 vorgesehen sein.

Während Figur 1 die einzelnen Komponenten des Spannsystems 1 zeigt, zeigt Figur 2 das auf den Nullpunktplatten 3 gelagerte Werkstück 2.

Jede Nullpunktplatte 3 ist in bekannter Weise auf einem Maschinentisch 4 gelagert. Dabei weist der Maschinentisch 4 in bekannter Weise in Längsrichtung verlaufende Nuten 5 auf, wodurch eine positionierverstellbare Montage der Nullpunktplatte 3 ermöglicht wird. Zwischen den Nullpunktplatten 3 und dem Maschinentisch 4 sind Befestigungsplatten 6 und optional Distanzelemente 7 vorgesehen.

Jede Nullpunktplatte 3 weist an ihrer Oberseite ausmündende Nullpunktaufnahmen 3a auf. Diese als Ausnehmungen in der Nullpunktplatte 3 ausgebildeten Nullpunktaufnahmen 3a weisen eine standardisierte Form und Größe auf. Alle Nullpunktaufnahmen 3a weisen dieselbe Form und Größe auf. Weiterhin sind auch die Positionen der Nullpunktaufnahmen 3a auf der Nullpunktplatte 3 standardisiert.

Die Nullpunktplatte 3 weist weiterhin einen Anschluss für ein nicht dargestelltes Spannmittel auf. Das nicht dargestellte Spannmittel kann generell mechanisch, hydraulisch oder pneumatisch arbeiten.

Das auf der Nullpunktplatte 3 zu befestigende Werkstück 2 besteht aus einem Gussteil, welches beispielsweise von einem Druckgussteil, einem Stahlgussteil oder einem Graugrussteil gebildet wird.

Entsprechend der Anordnung der Nullpunktaufnahmen 3a auf den Nullpunktplatten 3 sind in dem Werkstück 2 Einlegeteile 8 vorgesehen, die an der Unterseite des Gussteils ausmünden. Die identisch ausgebildeten Einlegeteile 8 bilden Komponenten des erfindungsgemäßen Spannsystems 1.

Zur Befestigung des Werkstücks 2 auf den Nullpunktplatten 3 sind als Komponenten des erfindungsgemäßen Spannsystems 1 genau eine Referenzverbindungseinheit 9, eine oder mehrere Ausgleichsverbindungseinheiten 10 sowie eine oder mehrere Unterstützungsverbindungseinheiten 11 vorgesehen.

Die Referenzverbindungseinheit 9 weist einen bezüglich ihrer Längsachse rotationssymmetrischen Grundkörper 9a auf. An der Oberseite des Grundkörpers 9a mündet ein Verbindungselement 12 aus. An der Unterseite des Grundkörpers 9a mündet ein Nullpunktbolzen 13 aus. Die Längsachsen des Verbindungselements 12 und des Nullpunktbolzens 13 fallen mit der Symmetrieachse des Grundkörpers 9a zusammen. Das Verbindungselement 12 ist in Form eines Gewindebolzens ausgebildet. Das Verbindungselement 12 ist an die Kontur eines Einlegeteils 8 angepasst, so dass das Verbindungselement 12 in das Einlegeteil 8 eingeschraubt und so in diesem fixiert werden kann. Die Kontur des Nullpunktbolzens 13 ist an die Kontur einer Nullpunktaufnahme 3a der Nullpunktplatte 3 angepasst, so dass der Nullpunktbolzen 13 in die Nullpunktaufnahme 3a eingeführt und durch Betätigen der Spannmittel in dieser fixiert werden kann.

Das Spannsystem 1 umfasst weiterhin eine Anzahl von identisch ausgebildeten Ausgleichsverbindungseinheiten 10, wobei in Figur 1 eine solche Ausgleichsverbindungseinheit 10 dargestellt ist. Die Ausgleichsverbindungseinheit 10 weist einen Grundkörper 10a auf, an dessen Oberseite ein Verbindungselement 12 ausmündet und an dessen Unterseite ein Nullpunktbolzen 13 ausmündet. Das Verbindungselement 12 der Ausgleichsverbindungseinheit 10 entspricht in identischer Weise dem Verbindungselement 12 der Referenzverbindungseinheit 9. Der Nullpunktbolzen 13 der Ausgleichsverbindungseinheit 10 entspricht in identischer Weise dem Nullpunktbolzen 13 der Referenzverbindungseinheit 9.

Bei der Ausgleichsverbindungseinheit 10, kann mit in einem Grundkörper 10a integrierten Verstellmitteln die Relativposition zwischen Verbindungselement 12 und Nullpunktbolzen 13 eingestellt werden.

Das Spannsystem 1 weist weiterhin eine Anzahl von identisch ausgebildeten Unterstützungsverbindungseinheiten 11 auf. Die Unterstützungsverbindungseinheit 11 weist einen rotationssymmetrischen Grundkörper 11a auf, an dessen Oberseite ein Verbindungselement 12 ausmündet. Dieses Verbindungselement 12 ist identisch mit dem Verbindungselement 12 der Referenzverbindungseinheit 9. Die ebene Unterseite 11b des Grundkörpers 11a der Referenzverbindungseinheit 9 bildet eine Auflagefläche zur Auflage auf der Nullpunktplatte 3 aus.

Das Verbindungselement 12 der Unterstützungsverbindungseinheit 11 kann entsprechend der Ausbildung der Ausgleichsverbindungseinheit 10 höhenverstellbar gelagert sein. Dasselbe gilt für das Verbindungselement 12 der Referenzverbindungseinheit 9.

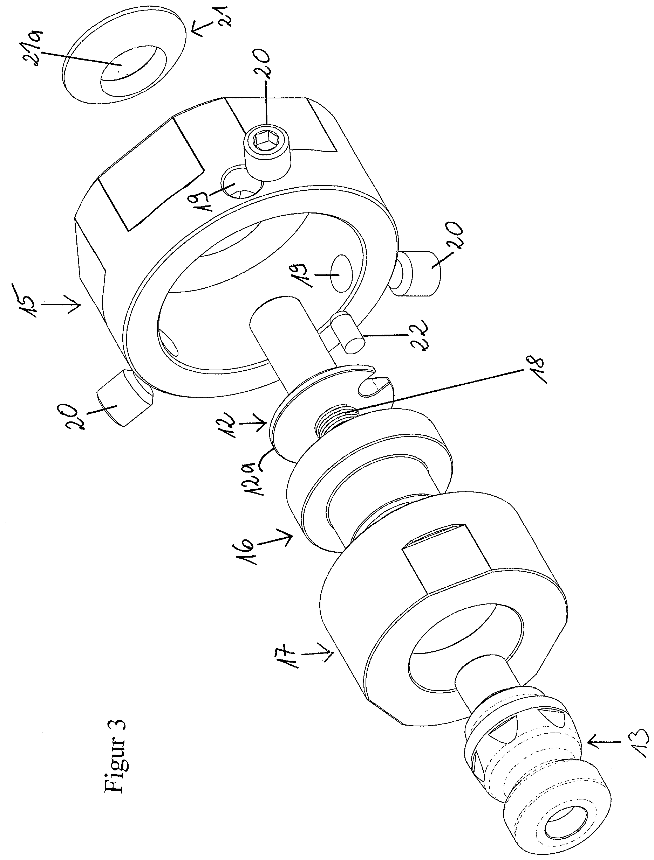

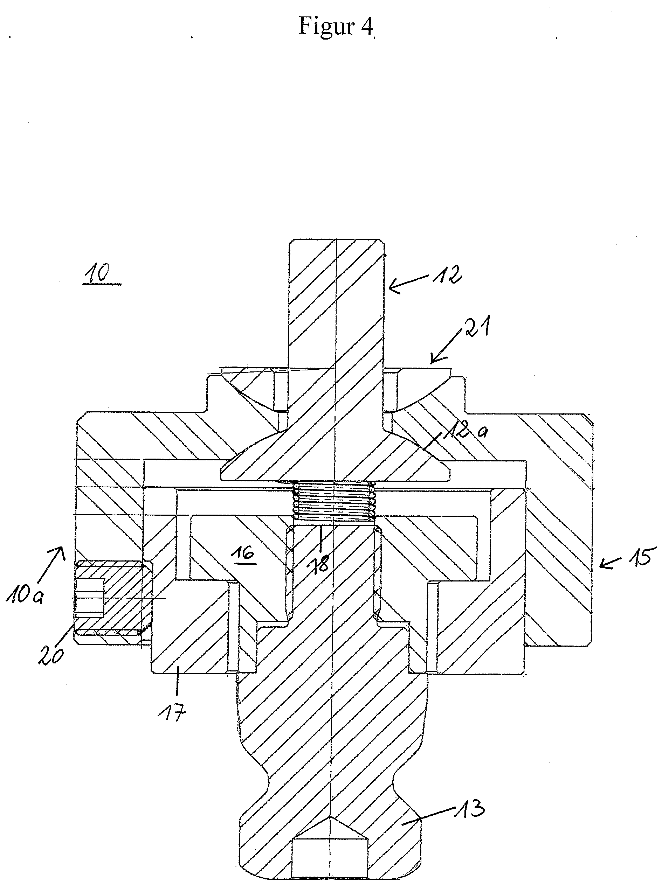

Die Figuren 3 und 4 zeigen ein erstes Ausführungsbeispiel der erfindungsgemäßen Ausgleichsverbindungseinheit 10. Dabei zeigt Figur 3 die einzelnen Komponenten der Ausgleichsverbindungseinheit 10 mit dem Nullpunktbolzen 13, dem Verbindungselement 12 und einzelnen Komponenten, die den Grundkörper 10a ausbilden. Die Komponenten umfassen ein Außensegment 15, ein Innensegment 16 und ein Zwischensegment 17.

Weiterhin ist eine Feder 18 vorgesehen, die an die Unterseite des Verbindungselements 12 anlegbar ist.

Die äußere Mantelfläche des Außensegments 15 bildet eine Sechskantstruktur aus. Weiterhin wird das Außensegment 15 von drei in Umfangsrichtung um jeweils 120° versetzt angeordneter Bohrungen 19 durchsetzt, in die Gewindestifte 20 eingeführt werden können.

Der vordere Teil des Verbindungselements 12 bildet einen Gewindebolzen aus. Das untere Ende ist in Form eines Absatzes 12a verbreitert, dessen Oberseite eine kugelsegmentförmige Oberfläche aufweist. Hierzu korrespondierend ist eine Kugelscheibe 21 mit einer zentralen Bohrung 21a vorgesehen.

Vom unteren Rand des Außensegments 15 steht ein Zylinderstift 22 hervor, der in eine Ausnehmung des Absatzes 12a greift und so das Verbindungselement 12 ausdrehsicher abstützt.

Figur 4 zeigt die Ausgleichsverbindungseinheit 10 im zusammengebauten Zustand.

Das Innensegment 16 ist am oberen Ende des Nullpunktbolzens 13 befestigt. Am oberen Rand des Innensegments 16 liegt die Feder 18 auf, die das Verbindungselement 12 nach oben abstützt. Das Verbindungselement 12 ist mit der Kugelscheibe 21 im Außensegment 15 gelagert. Zwischen dem Außensegment 15 und dem Innensegment 16 ist das Zwischensegment 17 vorgesehen.

Die Lagerung des Verbindungselements 12 mit dem Absatz 12a und der Kugelscheibe 21 bildet eine Pendellagerung derart, dass der über das Außensegment 15 hervorstehende Gewindebolzen des Verbindungselements 12 Pendelbewegungen bezüglich der Symmetrieachse der Ausgleichsverbindungseinheit 10 ausführen kann.

Das Innensegment 16 ist mit Spiel im Zwischensegment 17 gelagert, so dass es Lateralbewegungen senkrecht zur Symmetrieachse der Ausgleichsverbindungseinheit 10 und damit senkrecht zur Längsachse des Nullpunktbolzens 13 ausführen kann.

Schließlich kann das Außensegment 15 in Richtung der Symmetrieachse der Ausgleichsverbindungseinheit 10 relativ zum Zwischensegment 17 bewegt werden, wodurch eine Höhenverstellung des Verbindungselements 12 relativ zum Nullpunktbolzen 13 ermöglicht wird.

Nach dem Zusammenbau der Ausgleichsverbindungseinheit 10 wird eine provisorische Höheneinstellung des Verbindungselements 12 relativ zum Nullpunktbolzen 13 dadurch fixiert, dass die Gewindestifte 20 in die Bohrungen 19 des Außensegments 15 eingeschraubt werden und somit ihren Köpfen gegen das Zwischensegment 17 gepresst sind.

Der Gewindebolzen des Verbindungselements 12 wird dann in eine Aufnahme des Werkstücks, insbesondere in ein Einlegeteil 8 eingeführt. Durch die Pendellagerung des Verbindungselements 12 kann dabei ein Toleranzausgleich von Toleranzen der Aufnahme erfolgen. Zum Einführen wird das Außensegment 15 mit seiner sechskantförmigen Außenseite am Werkstück 2 festgeschraubt.

Dann wird der Nullpunktbolzen 13 in die Nullpunktplatte 3 eingeführt. Dort wird der Nullpunktbolzen 13 mittels der Spannmittel fixiert. Dabei erfolgt selbsttätig ein lateraler Toleranzausgleich, in dem das Innensegment 16 lateral gegen das Zwischensegment 17 bewegt wird.

Schließlich erfolgt eine Feinjustage der Höheneinstellung indem die Gewindestifte 20 in den Bohrungen 19 gelöst werden und das Außensegment 15 relativ zum Zwischensegment 17 in axialer Richtung verschoben wird. Danach werden die Gewindestifte 20 wieder in den Bohrungen 19 fixiert.

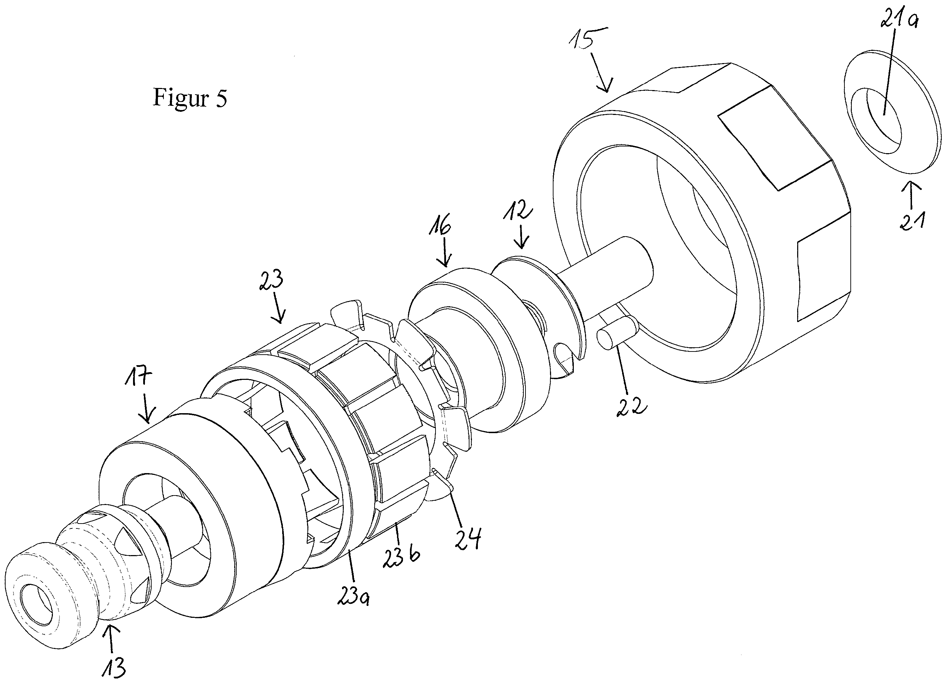

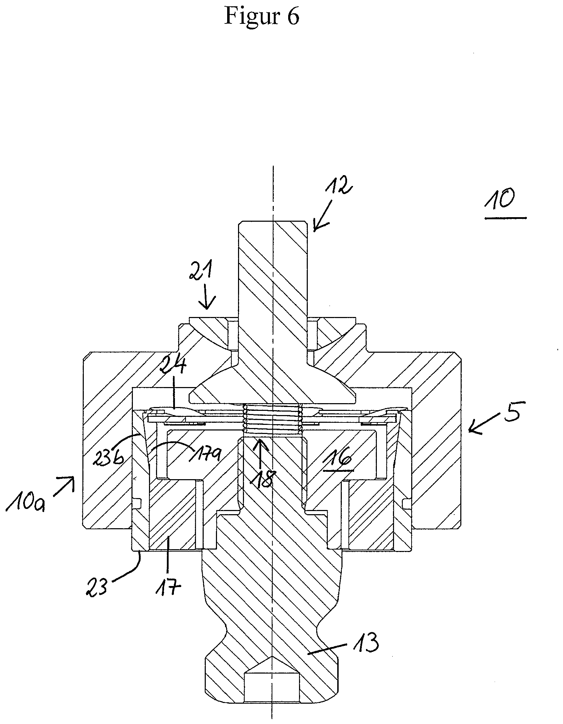

Die Figuren 5 und 6 zeigen ein zweites Ausführungsbeispiel der Ausgleichsverbindungseinheit 10, deren Aufbau im Wesentlichen der Ausführungsform der Figuren 3 und 4 entspricht.

Im Unterschied zur Ausführungsform der Figuren 3 und 4 erfolgt bei der Ausführungsform der Figuren 5 und 6 nicht nur die Fixierung der lateralen Position am Verbindungselement 12 und des Nullpunktbolzens 13, sondern auch deren Höheneinstellung durch die Betätigung der Spannmittel. Damit entfallen bei der Ausführungsform der Figuren 5 und 6 die Bohrungen 19 in dem Außensegment 15 und die zugeordneten Gewindestifte 20.

Zur Höheneinstellung ist bei der Ausführungsform der Figuren 5 und 6 eine Hülse 23 vorgesehen, die einen Ring 23a aufweist, an welchen Flächensegmente 23b anschließen, die durch in axialer Richtung der Hülse 23 verlaufende Spalten getrennt sind.

Weiterhin ist ein ringförmiges Federelement 24 vorgesehen.

Wie aus Figur 4, die die zusammengebaute Ausgleichsverbindungseinheit 10 zeigt, ersichtlich, liegt das Federelement 24 am oberen Rand des Innensegments 16 an.

Die Hülse 23 ist zwischen Außensegment 15 und Zwischensegment 17 gelagert. Dabei sind Schrägflächen an den Flächensegmenten 23b der Hülse 23 einer in Umfangsrichtung des Zwischensegments 17 umlaufenden Schrägfläche 17a zugeordnet.

Bei Betätigen der Spannmittel erfolgt analog zur Ausführungsform der Figuren 3 und 4 ein lateraler Toleranzausgleich durch Verschieben des Innensegments 16 relativ zum Zwischensegment 17 in lateraler Richtung. Gleichzeitig werden die Hülse 23 und das Zwischensegment 17 in axialer Richtung gegenläufig zueinander bewegt, wodurch das Außensegment 15 relativ zum Zwischensegment 17 in axialer Richtung verschoben wird. Diese Verschiebung erfolgt so lange, bis die Schrägflächen der Hülse 23 an der Schrägfläche 17a festklemmen und so die Höheneinstellung selbsttätig sichern.

Die Fixierung des Werkstücks 2 auf der Nullpunktplatte 3 auf dem Maschinentisch 4 in einer definierten Solllage erfolgt bei der Ausführungsform gemäß Figur 1 dadurch, dass zunächst das Verbindungselement 12 der Referenzverbindungseinheit 9 in ein Einlegeteil 8 des Werkstücks 2 und in weitere Einlegeteile 8 jeweils das Verbindungselement 12 einer Ausgleichsverbindungseinheit 10 eingeschraubt wird.

Der Nullpunktbolzen 13 der Referenzverbindungseinheit 9 wird in die Nullpunktaufnahme 3a einer Nullpunktplatte 3 eingeführt. Da die Längsachsen des Nullpunktbolzens 13 in der Referenzverbindungseinheit 9 fest und unveränderlich sind, bildet die Referenzverbindungseinheit 9 eine Mastereinheit, mit der die Absolutposition des Werkstücks 2 an der Nullpunktplatte 3 vorgegeben wird. Gleichzeitig mit Einführen des Nullpunktbolzens 13 der Referenzverbindungseinheit 9 in die Nullpunktaufnahme 3a der Nullpunktplatte 3 werden die Nullpunktbolzen 13 der Ausgleichsverbindungseinheit 10 in die beiden Nullpunktaufnahmen 3a weiterer Nullpunktplatten 3 eingeführt.

Bedingt durch Toleranzen beim Gussvorgang liegen im Allgemeinen die Einlegeteile 8 im fertigen Gussteil, das heißt dem Werkstück 2, nicht exakt in den Sollpositionen, sondern leicht versetzt hierzu. Da die Verstellmittel der Ausgleichsverbindungseinheiten 10 bei Einführen deren Nullpunktbolzen 13 in die Nullpunktaufnahmen 3a der Nullpunktplatte 3 in der Lösestellung sind, kann mit den Ausgleichsverbindungseinheiten 10 ein selbsttätiger Toleranzausgleich derart erfolgen, dass bei jeder Ausgleichsverbindungseinheit 10 die Achse des Nullpunktbolzens 13 relativ zur Achse des Verbindungselements 12 so verschoben wird, dass die Nullpunktbolzen 13 der Ausgleichsverbindungseinheiten 10 in die zugeordneten Nullpunktaufnahmen 3a der Nullpunktplatte 3 eingeführt werden.

Sobald die Einführung der Nullpunktbolzen 13 der Ausgleichsverbindungseinheit 10 und der Referenzverbindungseinheit 9 in die Nullpunktaufnahmen 3a der Nullpunktplatte 3 erfolgt ist, werden die Spannmittel betätigt. Dadurch werden die Nullpunktbolzen 13 in den Nullpunktaufnahmen 3a fixiert und gleichzeitig die Verstellmittel der Ausgleichsverbindungseinheiten 10 in die Fixierstellung überführt.

Damit ist das Werkstück 2 an der Nullpunktplatte 3 in seiner Solllage fixiert, wie Figur 2 zeigt. Wie aus Figur 2 ersichtlich liegt, der untere Rand des Werkstücks 2 für eine Bearbeitung frei, das heißt das mit dem erfindungsgemäßen Spannsystem 1 gespannte Werkstück 2 steht für eine 5-Achsen-Bearbeitung zur Verfügung.

Um eventuelle Vibrationen zu unterdrücken, kann im Bereich freiliegender Ecken des Werkstücks 2 jeweils ein weiteres Einlegeteil 8 vorgesehen sein. Beim Spannvorgang kann dann in diesen Einlegeteilen 8 jeweils das Verbindungselement 12 einer Unterstützungsverbindungseinheit 11 eingeführt werden. Diese Unterstützungsverbindungseinheiten 11 liegen dann mit ihren ebenen Unterseiten 11b auf der Oberseite einer Nullpunktplatte 3 auf. Durch diese zusätzliche Abstützung werden Werkstück-Vibrationen effizient unterdrückt.

### Bezugszeichenliste

- (1): Spannsystem
- (2): Werkstück
- (3): Nullpunktplatte
- (3a): Nullpunktaufnahmen
- (4): Maschinentisch
- (5): Nuten
- (6): Befestigungsplatte
- (7): Distanzelement
- (8): Einlegeteile
- (9): Referenzverbindungseinheit
- (9a): Grundkörper
- (10): Ausgleichsverbindungseinheit
- (10a): Grundkörper
- (11): Unterstützungsverbindungseinheit
- (11a): Grundkörper
- (11b): Unterseite
- (12): Verbindungselement
- (12a): Absatz
- (13): Nullpunktbolzen
- (15): Außensegment
- (16): Innensegment
- (17): Zwischensegment
- (17a): Schrägfläche
- (18): Feder
- (19): Bohrung
- (20): Gewindestift
- (21): Kugelscheibe
- (21a): zentrale Bohrung
- (22): Zylinderstift
- (23): Hülse
- (23a): Ring
- (23b): Flächensegment
- (24): Federelement

## Patentansprüche

1. Spannsystem (1) in Form eines Nullpunkt-Spannsystems, bei welchem eine Nullpunktplatte (3) vorgesehen ist, auf welcher ein Werkstück (2) gespannt werden kann, **dadurch gekennzeichnet, dass** wenigstens eine Ausgleichsverbindungseinheit (10) vorgesehen ist, welche einen Grundkörper (10a) aufweist, von dessen Oberseite ein Verbindungselement (12) hervorsteht, welches in eine Aufnahme an der Unterseite des Werkstücks (2) einführbar und dort fixierbar ist, und von dessen Unterseite ein Nullpunktbolzen (13) hervorsteht, welcher in eine Nullpunktaufnahme (3a) der Nullpunktplatte (3) einführbar ist, dass der Grundkörper (10a) der Ausgleichsverbindungseinheit (10) Verstellmittel ausbildet, wobei in einer Lösestellung der Verstellmittel mit diesen die Relativposition des Verbindungselements (12) zum Nullpunktbolzen (13) einstellbar ist, und wobei diese Einstellung mit Fixiermitteln fixierbar ist.

2. Spannsystem (1) nach Anspruch 1, **dadurch gekennzeichnet, dass** der Grundkörper (10a) ein mit dem Nullpunktbolzen (13) verbundenes Innensegment (16), ein mit dem Verbindungselement (12) verbundenes Außensegment (15) sowie ein das Innensegment (16) und das Außensegment (15) koppelndes Zwischensegment (17) aufweist, wobei durch eine Relativbewegung zwischen dem Außensegment (12) und dem Innensegment (16) eine Höhenverstellung des Verbindungselements (12) relativ zum Nullpunktbolzen (13) in Richtung der Längsachse des Nullpunktbolzens (13) bewirkt ist, und wobei durch eine Relativbewegung des Innensegments (16) relativ zum Zwischensegment (17) eine laterale Einstellung des Verbindungselements (12) relativ zum Nullpunktbolzen (13) in einer Ebene senkrecht zur Längsachse des Nullpunktbolzens (13) bewirkt ist.

3. Spannsystem (1) nach einem der Ansprüche 1 oder 2, **dadurch gekennzeichnet, dass** an der Nullpunktplatte (3) Spannmittel vorgesehen sind, mittels derer der Nullpunktbolzen (13) in der Nullpunktaufnahme (3a) fixierbar ist, und dass die Spannmittel Fixiermittel zur Fixierung von Einstellungen der Ausgleichsverbindungseinheit (10) bilden.

4. Spannsystem (1) nach Anspruch 3, **dadurch gekennzeichnet, dass** mit den Spannmitteln die laterale Einstellung des Verbindungselements (12) relativ zum Nullpunktbolzen (13) fixierbar ist.

5. Spannsystem (1) nach einem der Ansprüche 3 oder 4, **dadurch gekennzeichnet, dass** mit den Spannmitteln als Fixiermittel die Höheneinstellung des Verbindungselements (12) relativ zum Nullpunktbolzen (13) fixierbar ist.

6. Spannsystem (1) nach Anspruch 5, **dadurch gekennzeichnet, dass** zwischen dem Außensegment (15) und dem Zwischensegment (17) eine Hülse (23) vorgesehen ist, wobei bei nicht betätigtem Fixiermittel die Hülse (23) in axialer Richtung gegenüber dem Zwischensegment (17) verschiebbar ist, und wobei bei betätigtem Fixiermittel die Hülse (23) durch Festklemmen am Zwischensegment (17) lagefixiert ist.

7. Spannsystem (1) nach Anspruch 6, **dadurch gekennzeichnet, dass** die Hülse (23) an einer inneren Mantelfläche des Außensegments (12) gelagert ist.

8. Spannsystem (1) nach einem der Ansprüche 6 oder 7, **dadurch gekennzeichnet, dass** die Hülse (23) einen Ring (23a) und daran anschließend Flächensegmente (23b) aufweist, die durch in axialer Richtung der Hülse (23) verlaufende Spalte getrennt sind.

9. Spannsystem (1) nach Anspruch 8, **dadurch gekennzeichnet, dass** die Innenseiten der Flächensegmente (23b) Schrägflächen ausbilden, die korrespondierenden Schrägflächen (17a) an der äußeren Mantelfläche des Zwischensegments (17) zugeordnet sind.

10. Spannsystem (1) nach einem der Ansprüche 3 oder 4, **dadurch gekennzeichnet, dass** als Fixiermittel zur Fixierung der Höheneinstellung des Verbindungselements (12) relativ zum Nullpunktbolzen (13) Gewindestifte (20) vorgesehen sind, die an der Außenseite des Außensegments (12) betätigbar sind.

11. Spannsystem (1) nach Anspruch 10, **dadurch gekennzeichnet, dass** jeder Gewindestift (20) das Außensegment (15) in radialer Richtung durchsetzt, und dass zur Fixierung der Höheneinstellung des Verbindungselements (12) relativ zum Nullpunktbolzen (13) der Kopf des Gewindestifts (20) gegen eine äußere Mantelfläche des Zwischensegments (17) gepresst ist.

12. Spannsystem (1) nach einem der Ansprüche 1 bis 11, **dadurch gekennzeichnet, dass** das Verbindungselement (12) pendelnd gelagert ist.

13. Spannsystem (1) nach einem der Ansprüche 1 bis 12, **dadurch gekennzeichnet, dass** eine Referenzverbindungseinheit (9) vorgesehen ist, welche einen Grundkörper (9a) aufweist, von dessen Oberseite ein Verbindungselement (12) hervorsteht und von dessen Unterseite ein Nullpunktbolzen (13) hervorsteht, wobei die Längsachsen des Verbindungselements (12) und des Nullpunktbolzens (13) in einer festen, unveränderlichen Relativposition liegen.

14. Spannsystem (1) nach einem der Ansprüche 1 bis 13, **dadurch gekennzeichnet, dass** wenigstens eine Unterstützungsverbindungseinheit (11) vorgesehen ist, welche einen Grundkörper (11a) aufweist, von dessen Oberseite ein Verbindungselement (12) hervorsteht, wobei der Grundkörper (11a) eine ebene Unterseite (11b) als Auflagefläche auf der Nullpunktplatte (3) aufweist.

## Claims

1. Clamping system (1) in the form of a zero point clamping system, in which a zero point plate (3) is provided, on which a workpiece (2) can be clamped, **characterised in that** at least one compensating connecting unit (10) is provided, which comprises a base body (10a), from the upper side of which projects a connecting element (12) which is introducible into a receptacle at the lower side of the workpiece (2) and fixable therein and from the lower side of which projects a zero point pin (13) which is introducible into a zero point receptacle (3a) of the zero point plate (3), and that the base body (10a) of the compensating connecting unit (10) forms adjusting means, wherein in a released setting of the adjusting means the relative position of the connecting element (12) with respect to the zero point pin (13) is settable by the adjusting means and wherein this setting is fixable by a fixing means.

2. Clamping system (1) according to claim 1, **characterised in that** the base body (10a) comprises an inner segment (16) connected with the zero point pin (13), an outer segment (15) connected with the connecting element (12) and an intermediate segment (17) coupling the inner segment (16) and the outer segment (15), wherein a height adjustment of the connecting element (12) relative to the zero point pin (13) in the direction of the longitudinal axis of the zero point pin (13) is produced by a relative movement between the outer segment (12) and the inner segment (16) and wherein a lateral setting of the connecting element (12) relative to the zero point pin (13) in a plane perpendicular to the longitudinal axis of the zero point pin (13) is produced by a relative movement of the inner segment (16) relative to the intermediate segment (17).

3. Clamping system (1) according to one of claims 1 and 2, **characterised in that** provided at the zero point plate (3) are clamping means by means of which the zero point pin (13) is fixable in the zero point receptacle (3a), and that the clamping means form fixing means for fixing the settings of the compensating connecting unit (10).

4. Clamping system (1) according to claim 3, **characterised in that** the lateral setting of the connecting element (12) relative to the zero point pin (13) is fixable by the clamping means (12).

5. Clamping system (1) according to one of claims 3 and 4, **characterised in that** the height setting of the connecting means (12) relative to the zero point pin (13) is fixable by the clamping means as fixing means.

6. Clamping system (1) according to claim 5, **characterised in that** a sleeve (23) is provided between the outer segment (15) and the intermediate segment (17), wherein the sleeve (23) is displaceable in axial direction relative to the intermediate segment (17) when the fixing means are not actuated and wherein the sleeve (23) is positionally fixed by clamping fast to the intermediate segment (17) when the fixing means are actuated.

7. Clamping system (1) according to claim 6, **characterised in that** the sleeve (23) is mounted at an inner circumferential surface of the outer segment (12).

8. Clamping system (1) according to one of claims 6 and 7, **characterised in that** the sleeve (23) comprises a ring (23a) and flat segments (23b) which are connected therewith and which are separated by gaps extending in the axial direction of the sleeve (23).

9. Clamping system (1) according to claim 8, **characterised in that** the inner sides of the flat segments (23b) form inclined surfaces which are associated with corresponding inclined surfaces (17a) at the outer circumferential surface of the intermediate segment (17).

10. Clamping system (1) according to one of claims 3 and 4, **characterised in that** threaded pins (20), which are actuable at the outer side of the outer segment (12), are provided as fixing means for fixing the height setting of the connecting element (12) relative to the zero point pin (13).

11. Clamping system (1) according to claim 10, **characterised in that** each threaded pin (20) penetrates the outer segment (15) in radial direction and that the head of the threaded pin (20) is pressed against an outer circumferential surface of the intermediate segment (17) for fixing the height setting of the connecting element (12) relative to the zero point pin (13).

12. Clamping system (1) according to any one of claims 1 to 11, characterised int hat the connecting element (12) is mounted to be pendulating.

13. Clamping system (1) according to any one of claims 1 to 12, **characterised in that** a reference connecting unit (9) is provided, which comprises a base body (9a), from the upper side of which a connecting element (12) projects and from the lower side of which a zero point pin (13) projects, wherein the longitudinal axes of the connecting element (12) and the zero point pin (13) lie in a fixed, invariable relative position.

14. Clamping system (1) according to any one of claims 1 to 13, **characterised in that** at least one supporting connecting unit (11) is provided, which comprises a base body (11a) from the upper side of which a connecting element (12) projects, wherein the base body (11a) has a planar lower side (11b) as support surface on the zero point plate (3).

## Revendications

1. Système de serrage (1) revêtant la forme d'un système de serrage à point zéro, dans lequel est prévu un pion (3) à point zéro sur lequel une pièce (2) peut être abloquée, **caractérisé par** la présence d'au moins une unité de liaison (10) d'équilibrage, munie d'un corps de base (10a) au-delà de la face supérieure duquel fait saillie un élément de rattachement (12) qui peut être introduit, à la face inférieure de la pièce (2), dans un réceptacle dans lequel il peut être bloqué à demeure, corps au-delà de la face inférieure duquel fait saillie un tenon (13) de point zéro pouvant être introduit dans un réceptacle (3a) de point zéro dudit pion (3) à point zéro, ledit corps de base (10a) de ladite unité de liaison (10) d'équilibrage formant des moyens de déplacement, sachant que, dans une position de libération desdits moyens de déplacement, ces derniers permettent un réglage de l'emplacement relatif que l'élément de rattachement (12) occupe par rapport audit tenon (13) de point zéro, et sachant que ce réglage peut être verrouillé par des moyens de blocage à demeure.

2. Système de serrage (1) selon la revendication 1, **caractérisé par le fait que** le corps de base (10a) comprend un segment intérieur (16) relié au tenon (13) de point zéro, un segment extérieur (15) relié à l'élément de rattachement (12), ainsi qu'un segment intermédiaire (17) couplant ledit segment intérieur (16) et ledit segment extérieur (15), sachant qu'un mouvement relatif, s'opérant entre ledit segment extérieur (15) et ledit segment intérieur (16), a pour effet de provoquer un déplacement en hauteur dudit élément de rattachement (12) par rapport au tenon (13) de point zéro dans la direction de l'axe longitudinal dudit tenon (13) de point zéro, et sachant qu'un mouvement relatif dudit segment intérieur (16), par rapport audit segment intermédiaire (17), a pour effet de provoquer un réglage latéral dudit élément de rattachement (12) par rapport audit tenon (13) de point zéro dans un plan perpendiculaire audit axe longitudinal dudit tenon (13) de point zéro.

3. Système de serrage (1) selon l'une des revendications 1 ou 2, **caractérisé par** la présence, sur le pion (3) à point zéro, de moyens de bridage à l'aide desquels le tenon (13) de point zéro peut être bloqué à demeure dans le réceptacle (3a) de point zéro ; et par le fait que lesdits moyens de bridage forment des moyens de blocage à demeure conçus pour consigner des réglages de l'unité de liaison (10) d'équilibrage.

4. Système de serrage (1) selon la revendication 3, **caractérisé par le fait que** le réglage latéral de l'élément de rattachement (12), par rapport au tenon (13) de point zéro, peut être consigné à l'aide des moyens de bridage.

5. Système de serrage (1) selon l'une des revendications 3 ou 4, **caractérisé par le fait que** le réglage en hauteur de l'élément de rattachement (12), par rapport au tenon (13) de point zéro, peut être consigné à l'aide des moyens de bridage agissant comme des moyens de blocage à demeure.

6. Système de serrage (1) selon la revendication 5, **caractérisé par le fait qu'**un manchon (23) est prévu entre le segment extérieur (15) et le segment intermédiaire (17), sachant qu'à l'état non actionné du moyen de blocage à demeure, ledit manchon (23) peut être déplacé par rapport audit segment intermédiaire (17) dans la direction axiale, et sachant qu'à l'état actionné dudit moyen de blocage à demeure, ledit manchon (23) est verrouillé en position par coincement rigide sur ledit segment intermédiaire (17).

7. Système de serrage (1) selon la revendication 6, **caractérisé par le fait que** le manchon (23) est monté sur une surface d'enveloppe intérieure du segment extérieur (15).

8. Système de serrage (1) selon l'une des revendications 6 ou 7, **caractérisé par le fait que** le manchon (23) comporte une bague (23a) et, se rattachant à cette dernière, des segments de surface (23b) séparés par des interstices s'étendant dans la direction axiale dudit manchon (23).

9. Système de serrage (1) selon la revendication 8, **caractérisé par le fait que** les faces intérieures des segments de surface (23b) forment des surfaces obliques affectées à des surfaces obliques (17a) concordantes, sur la surface d'enveloppe extérieure du segment intermédiaire (17).

10. Système de serrage (1) selon l'une des revendications 3 ou 4, **caractérisé par le fait que** des chevilles filetées (20), pouvant être actionnées à la face extérieure du segment extérieur (15), sont prévues en tant que moyens de blocage à demeure conçus pour consigner le réglage en hauteur de l'élément de rattachement (12) par rapport au tenon (13) de point zéro.

11. Système de serrage (1) selon la revendication 10, **caractérisé par le fait que** chaque cheville filetée (20) traverse le segment extérieur (15) dans la direction radiale ; et **par le fait que**, pour assurer la consignation du réglage en hauteur de l'élément de rattachement (12) par rapport au tenon (13) de point zéro, la tête de ladite cheville filetée (20) est pressée contre une surface d'enveloppe extérieure du segment intermédiaire (17).

12. Système de serrage (1) selon l'une des revendications 1 à 11, **caractérisé par le fait que** l'élément de rattachement (12) est monté de manière pendulaire.

13. Système de serrage (1) selon l'une des revendications 1 à 12, **caractérisé par** la présence d'une unité de liaison (9) de référence, pourvue d'un corps de base (9a) au-delà de la face supérieure duquel un élément de rattachement (12) fait saillie, et au-delà de la face inférieure duquel un tenon (13) de point zéro fait saillie, sachant que les axes longitudinaux dudit élément de rattachement (12), et dudit tenon (13) de point zéro, occupent un emplacement relatif fixe et invariable.

14. Système de serrage (1) selon l'une des revendications 1 à 13, **caractérisé par** la présence d'au moins une unité de liaison (11) de soutien, dotée d'un corps de base (11a) au-delà de la face supérieure duquel un élément de rattachement (12) fait saillie, ledit corps de base (11a) comportant une face inférieure plane (11b) remplissant la fonction d'une surface d'appui sur le pion (3) à point zéro.
